# EUROPÄISCHE PATENTSCHRIFT

(11) **EP 0 937 219 B1**
(45) Veröffentlichungstag und Bekanntmachung des Hinweises auf die Patenterteilung: **29.03.2000**
(21) Anmeldenummer: 97950114.5
(22) Anmeldetag: 05.11.1997
(51) Int. Cl.: F23G 5/46, F23J 15/02

(54) **VERFAHREN ZUR VERBRENNUNG VON ABFALL UND FOSSILEM BRENNSTOFF IN EINER KOMBINATION EINER GROSSFEUERUNGSANLAGE UND EINER ABFALLVERBRENNUNGSANLAGE UND SYSTEM ZUR DURCHFÜHRUNG DES VERFAHRENS**
METHOD FOR BURNING WASTE AND FOSSIL FUELS BY COMBINING A LARGE FURNACE WITH AN INCINERATOR AND SYSTEM FOR CARRYING OUT THE METHOD
PROCEDE D'INCINERATION DE DECHETS ET DE COMBUSTIBLE FOSSILE FAISANT INTERVENIR UNE INSTALLATION A CHAUDIERE INDUSTRIELLE COMBINEE A UNE INSTALLATION D'INCINERATION D'ORDURES ET SYSTEME DE MISE EN OEUVRE DE CE PROCEDE

(30) Priorität: 08.11.1996 DE 19646099
(43) Veröffentlichungstag der Anmeldung: 25.08.1999
(73) Patentinhaber: L. & C. Steinmüller GmbH, 51641 Gummersbach (DE); VEAG Vereinigte Energiewerke AG, 10115 Berlin (DE)
(72) Erfinder: MOHN, Ulrich, D-51766 Engelskirchen (DE); HOLSTE, Reinhard, D-51647 Gummersbach (DE); SANDER, Hans-Joachim, D-06118 Halle (DE); SCHNEIDER, Wolfram, D-03054 Cottbus (DE); HINZE, Bernhard, D-39261 Zerbst (DE)
(74) Vertreter: Carstens, Wilhelm, Dipl.-Phys.
(86) Internationale Anmeldenummer: EP9706128
(87) Internationale Veröffentlichungsnummer: WO9821525

(56) Entgegenhaltungen:
- DE-A- 4 442 136
- DE-A- 19 609 721
- US-A- 4 774 895
- US-A- 5 626 088

## Beschreibung

Die Erfindung betrifft zunächst ein Verfahren zur Verbrennung von Abfall und fossilem Brennstoff in einer Kombination einer fossil befeuerten Großkesselanlage und einer Abfallverbrennungsanlage, bei dem die Abgase der Abfallverbrennungsanlage mit Abgasen der Großfeuerungsanlage zusammengeführt werden und bei dem eine Reinigung der Abgase erfolgt.

Aus der DE 44 42 136 A1 ist ein solches Verfahren bekannt, bei dem die Abgase der Müllverbrennungsanlage in den Feuerraum der Großkesselanlage eingebracht werden. Dabei wird angestrebt, daß die Abgasreinigungsanlage des fossil gefeuerten Kraftwerks die Schadstoffemission der Abfallverbrennungsanlage auf Kraftwerkstandard senkt. Der Nachteil dieser Anordnung ist, daß die Abgase der Müllverbrennungsanlage mit ihrem Gehalt an HCI, HF, SO₂, NOₓ, PCDD/F und Schwermetalle, insbesondere Hg, mit den bei der Verbrennung des fossilen Brennstoffes entstehenden Abgasen vermischt werden. Die Abgasreinigungsanlage des fossil gefeuerten Kraftwerks muß daher entsprechend der Mischungsregel der 17. BlmSchV für Schwermetalle und PCDD/F ausgelegt sein. Dies führt hinsichtlich der Schadstoffe in den Abgasen der Abfallverbrennungsanlage zu einer Überdimensionierung der dem Großkessel nachgeschalteten Abgasreinigungsanlage.

Es ist die Aufgabe der vorliegenden Erfindung ein Verfahren anzugeben, bei dem die Abgasreinigung der Feuerungskombination vereinfacht wird.

Diese Aufgabe wird dadurch gelöst, daß die Abgase der Abfallverbrennungsanlage vor ihrer Zusammenführung mit den Abgasen der Großkesselanlage hinsichtlich Schwermetallen und Dioxinen/Furanen (PCDD/F) vorgereinigt werden und die so vorgereinigten Abgase der Abfallverbrennungsanlage zusammen mit den Abgasen der Großkesselanlage zumindest einer Abgasentschwefelung zugeführt werden.

Bei der erfindungsgemäßen Verfahrensführung werden in der Vorreinigung die Schwermetalle Cd, Tl, Hg, Sb, Pb, Cu, Co, Sn, V, As, Cr, Mn, Ni und ihre Verbindungen bis auf die Grenzwerte der 17. BlmSchV oder tiefer entfernt. Aus der Gruppe der polyhalogenierten Kohlenwasserstoffe werden zumindest die Dioxine und Furane entsprechend der Festlegung der 17. BlmSchV bis auf die Grenzwerte oder darunter entfernt. Aus der Gruppe der sauren Schadgase werden Spuren von HCl, HF und SO₂ entfernt. Das vorhandene SO₃ wird quantitativ entfernt. Die verbleibenden Anteile an SO₂ ,HCI und HF werden in der nachgeschalteten gemeinsamen Abgasentschwefelung entfernt.

Die Vorreinigung erfolgt durch Abkühlung der Abgase, Zugabe mindestens eines Sorptionsmittels und filternder Abscheidung der vorhandenen bzw. sich bildenden Feststoffe.

Vorzugsweise erfolgt vor der Vorreinigung eine Vorentstaubung, um bereits Flugasche aus dem Abgas der Abfallverbrennungsanlage abzuscheiden.

Zweckmäßigerweise werden die Abgase der Abfallverbrennungsanlage vor der Abgasentschwefelung und weiter bevorzugt vor der Entfernung von Schwermetallen und von polyhalogenierten Kohlenwasserstoffen nach dem SNCR- oder dem SCR-Verfahren entstickt.

Es ist jedoch auch denkbar, die Abgase der Abfallverbrennungsanlage und die Abgase der Großkesselanlage gemeinsam nach der Abgasentschwefelung zu entsticken.

Wenn die Abkühlung der Abgase der Abfallverbrennungsanlage durch Verdampfungskühlung erfolgt, kann es sinnvoll sein, als Verdampfungskühlungsmittel mindestens einen Teil des Abwassers einer nassen Abgasentschwefelungsanlage einzusetzen.

Sollte insbesondere beim nachträglichen Zubau einer Abfallverbrennungsanlage am Standort einer fossil befeuerten Großkesselanlage mit nachgeschalteter Abgasentschwefelung der Entschwefelungsgrad nicht ausreichend sein, kann es sinnvoll sein, in der Vorreinigung mindestens ein Absorptionsmittel zur teilweisen Entfernung von SO₂, HCl, HF einzusetzen.

Bei Betrieb einer Abfallverbrennungsanlage als Satellitenfeuerung zu einer Großkesselanlage ist es zweckmäßig, daß die in der Abfallverbrennungsanlage freigesetzte Wärme, vorzugsweise in Form von Dampf, in den Wasser-Dampf-Kreislauf der Großkesselanlage eingespeist wird.

Hierfür bieten sich insbesondere folgende Maßnahmen für die Einbindung des Dampfes an:
ND-Vorwärmstrecke, HD-Vorwärmstrecke und/oder kalte Zwischenüberhitzerleitung.

Die Erfindung richtet sich auch auf ein System mit einer fossil befeuerten Großkesselanlage und einer Abfallverbrennungsanlage und einer der Großkesselanlage nachgeschalteten Abgasreinigungsanlage.

Erfindungsgemäß ist vorgesehen, daß der Großfeuerungsanlage abgasseitig mindestens eine Abgasentschwefelungsanlage nachgeschaltet ist und der Abfallverbrennungsanlage abgasseitig eine Vorreinigungsanlage nachgeschaltet ist, die ihrerseits der Abgasentschwefelungsanlage der Großkesselanlage vorgeschaltet ist.

Die Unteransprüche 12-13 betreffen vorteilhalfte Ausgestaltungen des Systems bestehend aus Großkesselanlage und Abfallverbrennungsanlage.

Die Erfindung soll nun anhand der beigefügten Figuren näher erläutert werden. Es zeigt:
Fig. 1 ein Blockschema des erfindungsgemäßen Systems und
Fig. 2 eine Ausführungsform des erfindungsgemäßen Systems.

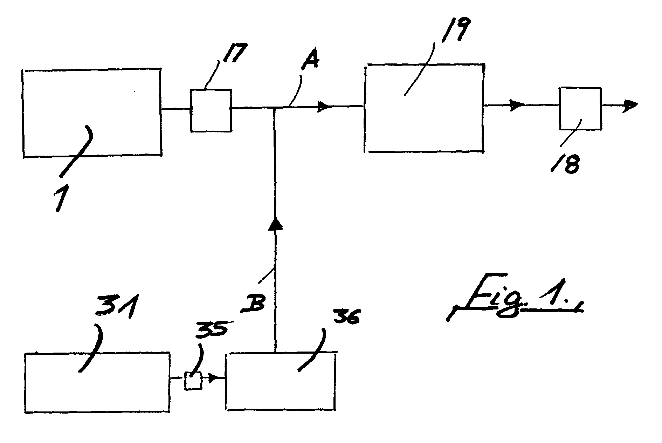

Gemäß Fig. 1 wird das Abgas A einer Großkesselanlage 1 einer Abgasentschwefelungsanlage 19 zugeleitet und in ihr entschwefelt.

Falls die in der Großkesselanlage 1 vorgenommenen Primärmaßnahmen für eine Entstickung nicht ausreichen, kann eine Entstickung nach dem SCR-Verfahren in einer High-Dust-Stufe 17 vor der Abgasentschwefelungsanlage oder in einer Low-Dust-Entstickungsungsstufe 18 nach der Abgasentschweflungsanlage 19 vorgenommen werden.

Der Abgasentschwefelungsanlage 19 wird auch das Abgas B einer Abfallverbrennungsanlage 31 zugeleitet, nach dem es über eine Vorreinigungsstufe 36 geführt worden ist. In dieser Vorreinigungsstufe werden die Werte für Schwermetalle, Staub und zumindest PCCD/F auf die von der 17. BlmSchV vorgegebenen Grenzwerte oder darunter abgesenkt. Zwischen Abfallverbrennungsanlage und Vorabscheidung ist verfahrenstechnisch eine Vorentstaubung 35 eingeschaltet, um Flugasche aus dem Abgas B zu entfernen. Es wird darauf aufmerksam gemacht, daß das Abgas A der Großkesselanlage noch in bekannter Weise über nicht dargestellte Luftvorwärmer, Elektrofilter oder dergleichen geführt werden kann.

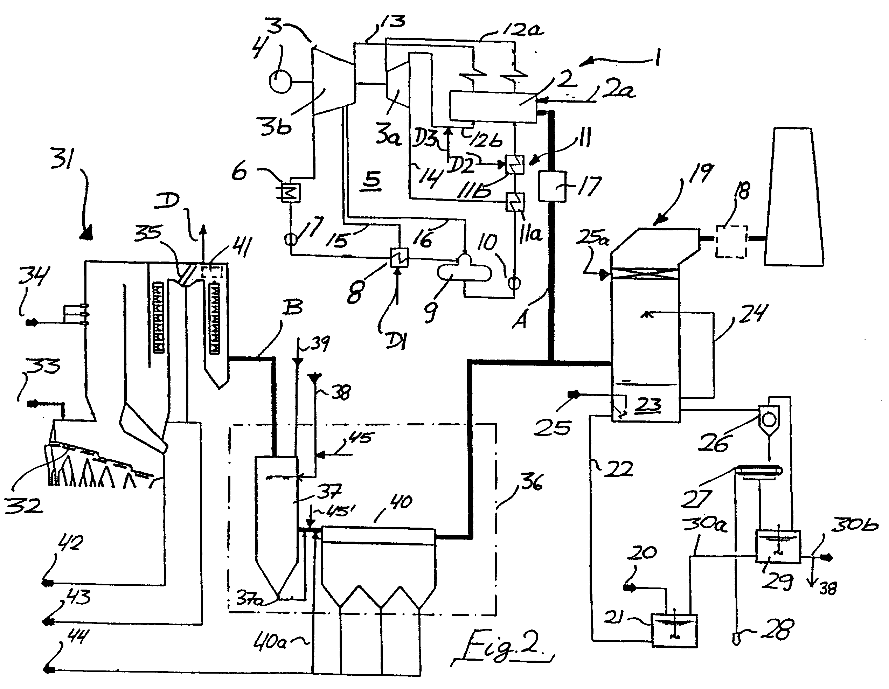

In der Fig. 2 ist im oberen Teil die Großkesselanlage 1 mit Dampferzeuger 2 mit Kohlezufuhr 2a, Dampfturbinenbaugruppe 3 mit beispielsweise einer Hochdruckturbine 3a und einer Niederdruckturbine 3b und Generator 4 dargestellt. Der Dampferzeuger 2 ist mit der Dampfturbinenbaugruppe 3 durch einen Wasser-Dampf-Kreislauf 5 verbunden.

Der Wasser-Dampf-Kreislauf besteht aus Kondensator 6, Hauptkondensatpumpe 7, Niederdruck-Vorwärmstrecke 8 (der Einfachheithalber ist nur ein ND-Vorwärmer dargestellt), Speisewasserbehälter 9, Speisewasserpumpe 10, Hochdruckvorwärmstrecke 11 (der Einfachheithalber sind zwei HD-Vorwärmer dargestellt), dem Dampferzeuger 2, Hochdruckdampfleitung 12a zur Turbine 3a, ZÜ-Leitung 12b und Dampfleitung 13 zur Turbine 3b. Von der Turbine 3a wird über eine Anzapfdampfleitung 14 ein HD-Vorwärmer 11a gespeist, während über Anzapfdampfleitungen 15 und 16 der ND-Vorwärmer 8 und der Speisewasserbehälter 9 beaufschlagt werden.

Dem Dampferzeuger 2 sind abgasseitig eine High-Dust-SCR-Anlage 17 zur Entstickung, sowie eine nasse Abgasentschwefelungsanlage 19 nachgeschaltet. Anstelle der High-Dust-SCR-Anlage 17 vor der Entschwefelungsanlage kann der Abgasentschwefelungsanlage 19 auch eine Low-Dust-SCR-Anlage 18 nachgeschaltet sein.

Wenn die Großkesselanlage 1 durch Primärmaßnahmen am Feuerungssystem ausreichend entstickt werden kann, wie dies z. B. bei einer mit Braunkohle gefeuerten Großkesselanlage 1 der Fall ist, kann auf eine gesonderte Entstikkungsanlage verzichtet werden.

Die nasse Abgasentschwefelungsanlage 19 wird mit bei 20 zugeführten und in einem Behälter 21 angemaischten Kalkstein betrieben. Andere Schwefel einbindenden Mittel, die eingesetzt werden können, sind CaO, Ca(OH)₂, MgCO₃ oder Dolomit. Der Behälter 21 ist über eine Leitung 22 mit dem Sumpf 23 in der Abgasentschwefelungsanlage verbunden. Ebenfalls mit dem Sumpf 23 ist ein nur schematisch dargestellter Umwälzkreislauf 24 verbunden. Weiterhin wird dem Sumpf 23 Oxidationsluft 25 zugeführt. Im Bereich der Tröpfchenabscheidung wird bei 25a Frischwasser zugeführt. Der durch die Oxidation von Calciumsulfit zu Calciumsulfat im Sumpf entstehende Gips wird mittels eines Zyklons 26 und einem nachgeschalteten Bandfilter 27 entwässert und bei 28 abgezogen und das Wasser des Bandfilters 27 wird in einen Abschlämmwasserbehälter 29 überführt. Ein Teil 30a des Abschlämmwassers wird dem Anmaischbehälter 21 zugeführt und ein anderer Teil 30b wird abgezogen.

Bei der bevorzugten Ausführungsform wird die Abgasentschwefelungsanlage als naß arbeitende Abgasentschwefelungsanlage 19 betrieben. Es wäre unter Umständen auch der Einsatz einer halbtrockenen Sprühabsorptionsanlage denkbar.

Der Großkesselanlage 1 ist als Satellitenfeuerung eine Abfallverbrennungsanlage 31 mit einer Rostfeuerung 32 zugeordnet. Die bei der Verbrennung des Abfalls 33 entstehenden Abgase werden mittels bei 34 zugeführtem Ammoniakwasser nach dem SNCR-Verfahren entstickt, bei 35 einer mechanischen Vorentstaubung, z. B. durch Fangrinnen unterzogen, und ihnen wird durch eine Vielzahl von mit Wasser oder Dampf beaufschlagten Heizflächen unter Bildung von Dampf D Wärme entzogen, der - wie in der Figur schematisch dargestellt ist - aus der Abfallverbrennungsanlage abgezogen wird. In der Fig. 2 ist eine Abfallverbrennungsanlage mit Vertikalzugkessel dargestellt. Selbstverständlich kann auch eine Abfallverbrennungsanlage mit Horizontalzug eingesetzt werden.

Das die Abfallverbrennungsanlage 31 verlassende Abgas wird einer Vorreinigung 36 zugeführt. Diese weist einen Kühler 37 mit Feststoffrückführung 37a auf. In dem als Verdampfungskühler ausgebildeten Kühler 37 wird das Abgas unter Zufuhr von Wasser 38 auf eine Temperatur von z. B. 170-180°C abgekühlt. Dem Abgas B wird vor oder nach dem Verdampfungskühler 37 Aktivkoks 39 zur Einbindung von Schwermetallen und polyhalogenierten Kohlenwasserstoffen, insbesondere PCDD/F zugeführt.

Zur Abscheidung von auch nach der Vorentstaubung 35 noch vorhandenem Staub und zugeführtem Aktivkoks 39 wird das Abgas über einen filternden Abscheider 40, insbesondere einen Gewebefilter geführt.

Als Sorptionsmittel können neben Aktivkoks auch andere Stoffe, wie Aktivkohle, Tonminerale, Kalke, Kalkstein, Zeolithe oder Mischungen dieser Stoffe eingesetzt werden. Ein Teil des Sorptionsmittels für Schwermetall und halogenierte Kohlenwasserstoffe kann durch Natriumtetrasulfid für die Quecksilberabscheidung ersetzt werden, um den Koksanteil für die Dioxin- und Furaneinbindung zu erniedrigen.

Die Vorentstaubung 35 bei einer Temperatur von z. B. 320-450°C verringert die Bildung von PCDD/F durch die de-novo-Synthese. Für die Vorentstaubung 35 werden vorzugsweise mechanische Abscheider, wie Fangrinnen, Zyklone und dergleichen eingesetzt. Der Staub aus der Vorentstaubung weist einen geringeren Schadstoffgehalt auf.

Anstelle der Entstickungsstufe 34 nach dem SNCR-Verfahren ist es auch denkbar, der Vorentstaubung 35 eine nach dem SCR-Verfahren arbeitende Entstickungsstufe 41 nachzuschalten.

Als Verdampfungswasser 38 kann dem Verdampfungskühler 37 ein Teil oder das ganze Abschlämmwasser 30b der Abgasentschwefelungsanlage zugeführt werden, so daß dieser nicht nur als Verdampfungskühler, sondern auch als Sprühtrockner arbeitet. Unter Umständen ergibt sich damit ein abwasserfreier Betrieb der Abgasentschwefelungsanlage 19, wenn eine Sprühtrocknung des gesamten Abwassers möglich ist oder ein verbleibender Rest des Abwassers 30b zur Befeuchtung der aus der Großkesselanlage und/oder Abfallverbrennunganlage abgezogenen Aschen herangezogen wird.

Aus der Abfallverbrennungsanlage 31 und der ihr nachgeschalteten Vorreinigungsstufe 36 werden Kesselschlacke 42, vorabgeschiedener Kesselstaub 43 und eine Mischung 44 aus Reststaub und Aktivkoks abgezogen. Mit dieser Mischung wird anfallendes NH₃ aus dem NH₃-Schlupf abgezogen.

Das den Filter 40 verlassende Abgas ist hinsichtlich seines Gehalts an Schwermetallen, insbesondere Quecksilber, und PCDD/F auf die Grenzwerte der 17. BlmSchV abgesenkt, ist jedoch noch beladen mit SO₂, HCI und gegebenenfalls HF. Dieser Abgasstrom wird der Abgasentschwefelungsanlage 19 zugeführt, die die Werte des Abgases B der Abfallverbrennungsanlage für SO₂, HCI, HF mindestens auf die von der 17. BlmSchV vorgegebenen Grenzwerte reduziert.

Aus der Entschwefelungsanlage wird Gips abgezogen. Die Schadgaskomponente HCI wird als Chloride zusammen mit dem Abschlämmwasser bzw. als Fluoride zusammen mit Gips 28 abgezogen. Auch ein etwaig vorhandener NH₃-Schlupf aus der Entstickung des Abgases B wird auch bei hohen Schlupfwerten, d. h. bei sehr niedrigen NO_{X}-Werten, sicher in der Abgasentschwefelungsanlage 19 abgeschieden und mit dem Abwasser 30b entfernt.

Zumindest ein Teil der im Gewebefilter 40 abgeschiedenen Feststoffe kann über Leitung 40a in den Abgasstrom stromauf des Gewebefilters rückgeführt werden.

Falls die der Großkesselanlage 1 nachgeschaltete Abgasentschwefelungsanlage 19 alleine über eine nicht ausreichende Kapazität verfügt, das ihr zugeführte Abgas und damit auch den Abgasstrom B der Abfallverbrennungsanlage auf die Werte der 17. BimSchV zu reinigen, kann es zweckmäßig sein, eine Vorreinigung auch hinsichtlich der Schadgaskomponenten SO₂, HCI und HF in der Vorreinigungsstufe 36 zu bewirken, in dem der Verdampfungskühler 36 als Sprühabsorber mit Kalkmilch bei sehr niedriger Stöchiometrie betrieben wird, oder ein entsprechend gewähltes Absorptionsmittel in trockener Form nach dem Verdampfungskühler 36 zugegeben wird. Dies ist in der Fig. 2 schematisch durch die Pfeile 45 bzw. 45' dargestellt.

Unter Umständen kann anstelle eines Verdampfungskühlers 37 auch eine Kesselheizfläche als Wärmetauscher zur Abkühlung des Abgases eingesetzt werden, wenn ihre Wärme bei der Kopplung der Wasser-Dampf-Kreisläufe der Großkesselanlage und der Abfallverbrennungsanlage vernünftig eingebunden werden kann.

Falls auf eine eigene Entstickung der Abgase der Abfallverbrennungsanlage 31 nach dem SNCR-Verfahren (34) bzw. SCR-Verfahren (41) verzichtet werden soll, ist es zweckmäßig, das Abgas der Abfallverbrennungsanlage gemeinsam mit dem Abgas der Großkesselanlage über die in der Fig. 2 gestrichelt dargestellte Denox-Anlage 18 zu führen.

Der aus der Abfallverbrennungsanlage 31 abgezogene Dampf D kann in den Wasser-Dampf-Kreislauf in der Niedervorwärmstrecke 8 eingebunden werden, wie dies durch den Pfeil D1 schematisch dargestellt ist. Dies kann vorzugsweise dadurch geschehen, daß der Dampf direkt in einen vorhandenen ND-Vorwärmer eingespeist wird.

Andererseits ist es auch möglich, in der HD-Vorwärmstrecke 11 einen gesonderten Vorwärmer 11b vorzusehen, in den der Dampf eingebunden wird, wie dies in der Figur durch den Pfeil D2 schematisch dargestellt ist.

Schließlich ist es auch möglich, den Dampf in die von der Turbine 3a zum Dampferzeuger 2 zurückführende kalte Zwischenüberhitzerleitung 12 einzubinden, wie dies in der Figur durch den Pfeil D3 schematisch dargestellt ist.

## Patentansprüche

1. Verfahren zur Verbrennung von Abfall und fossilem Brennstoff in einer Kombination einer fossil befeuerten Großkesselanlage und einer Abfallverbrennungsanlage, bei dem die Abgase der Abfallverbrennungsanlage mit den Abgasen der Großfeuerungsanlage zusammengeführt werden und bei dem eine Reinigung der Abgase erfolgt,
**dadurch gekennzeichnet**,
daß die Abgase der Abfallverbrennungsanlage vor ihrer Zusammenführung mit den Abgasen der Großkesselanlage hinsichtlich Schwermetallen und Dioxinen/Furanen (PCDD/F) vorgereinigt werden und die so vorgereinigten Abgase der Abfallverbrennungsanlage zusammen mit den Abgasen der Großkesselanlage einer Abgasentschwefelung zugeführt werden.

2. Verfahren nach Anspruch 1,
**dadurch gekennzeichnet**,
daß die Vorreinigung durch Abkühlung der Abgase, Zugabe mindestens eines Sorptionsmittels und filternder Abscheidung der vorhandenen bzw. sich bildenden Feststoffe erfolgt.

3. Verfahren nach Anspruch 1 oder 2,
**dadurch gekennzeichnet**,
daß vor der Vorreinigung eine Vorentstaubung erfolgt.

4. Verfahren nach Anspruch 1 - 3,
**dadurch gekennzeichnet**,
daß die Abgase der Abfallverbrennungsanlage vor der Entschwefelung entstickt werden.

5. Verfahren nach Anspruch 4,
**dadurch gekennzeichnet,**
daß die Abgase der Abfallverbrennunganlage vor der Entfernung von Schwermetall und von polyhalogenierten Kohlenwasserstoffen entstickt werden.

6. Verfahren nach mindestens einem der Ansprüche 1 - 3,
**dadurch gekennzeichnet**,
daß die Abgase der Abfallverbrennungsanlage und die Abgase der Großkesselanlage in die Entschwefelungsanlage über eine gemeinsame Entstickungsstufe geführt werden.

7. Verfahren nach mindestens einem der Ansprüche 1 - 6,
**dadurch gekennzeichnet**,
daß bei Abkühlung der Abgase der Abfallverbrennungsanlage durch Verdampfungskühlung als Verdampfungskühlmittel mindestens ein Teil des Abwassers einer nassen Abgasentschwefelungsanlage eingesetzt wird.

8. Verfahren nach mindestens einem der Ansprüche 1 - 7,
**dadurch gekennzeichnet**,
daß in der Vorreinigung mindestens ein Absorptionsmittel zur teilweisen Entfernung von SO₂, HCI und HF eingesetzt wird.

9. Verfahren nach mindestens einem der Ansprüche 1 - 8,
**dadurch gekennzeichnet**,
daß die in der Abfallverbrennungsanlage freigesetzte Wärme vorzugsweise in Form von Dampf in den Wasser-Dampf-Kreislauf der Großkesselanlage eingespeist wird.

10. Verfahren nach mindestens einem der Ansprüche 1 - 9,
**dadurch gekennzeichnet,**
daß der in der Abfallverbrennungsanlage erzeugte Dampf in die ND-Vorwärmstrecke, in die HD-Vorwärmstrecke und/oder in die kalte Zwischenüberhitzerleitung eingebunden wird.

11. System mit einer fossil befeuerten Großkesselanlage und einer Abfallverbrennungsanlage und einer der Großfeuerungsanlage nachge-schalteten Abgasreinigungsanlage,
**dadurch gekennzeichnet**,
daß der Großfeuerungsanlage (1) abgasseitig zumindest eine Abgasentschwefelungsanlage (19) nachgeschaltet ist und daß der Abfallverbrennungsanlage (31) abgasseitig eine Vorreinigungsanlage (36) nachgeschaltet ist, die ihrerseits der Abgasentschwefelungsanlage (19) der Großkesselanlage (1) vorgeschaltet ist.

12. System nach Anspruch 11,
**dadurch gekennzeichnet**,
daß die Abfallverbrennungsanlage eine Entstickung (34; 41) aufweist und der Großkesselanlage (1) eine der Abgasreinigungsanlage (19) vorgeschaltete SCR-Entstickung (18) zugeordnet ist.

13. System nach Anspruch 11,
**dadurch gekennzeichnet,**
daß das Abgas der Großkesselanlage (1) und das Abgas der Abfallverbrennungsanlage (31) gemeinsam über eine Entstickungsanlage (18) führbar sind.

## Claims

1. Method for burning waste and fossil fuel in a combination of a fossil fuelled utility boiler plant and a waste incinerator plant, with which the flue gases of the waste incinerator plant are brought together with the flue gases of the utility boiler plant and with which a purification of the flue gases is performed,
characterized in that the flue gases of the waste incineration plant before joining to the flue gases of the utility boiler plant are prepurified with respect to heavy metals and dioxines / furans (PCDD/F) and the thus prepurified flue gases of the waste incinerator plant are conducted together with the flue gases of the utility boiler plant to a flue gas desulphurization.

2. The method according to claim 1,
characterized in that the prepurification is performed by cooling the flue gases, adding of at least one sorption medium and filtering separation of the existing solids and the forming solids, resp.

3. The method according to claims 1 or 2,
characterized in that before the prepurification a prededusting is performed.

4. The method according to claims 1 - 3,
characterized in that before the desulphurization the flue gases of the waste incinerator plant are subjected to a denoxification.

5. The method according to claim 4,
characterized in that the flue gases of the waste incinerator plant are subjected to a denoxification before the removal of heavy metals and of polyhalogenated hydrocarbons.

6. The method according to at least one of the claims 1 - 3,
characterized in that the flue gases of the waste incinerator plant and the flue gases of the utility boiler plant are conducted into the desulphurization plant via a common denoxification stage.

7. The method according to at least one of the claims 1 - 6,
characterized in that in case of cooling of the flue gases of the waste incinerator plant by evaporation cooling at least part of the waste water of a wet desulphurization plant is used as an evaporation cooling medium.

8. The method according to at least one of the claims 1 - 7,
characterized in that with the prepurification at least one absorption medium for partial removing of SO₂, HCI and HF is used.

9. The method according to at least one of the claims 1 - 7,
characterized in that the heat generated in the waste heat incinerator plant is preferably fed in form of steam into the water-steam-circuit of the utility boiler plant.

10. The method according to at least one of the claims 1 - 9,
characterized in that the steam generated in the waste incinerator plant is fed into the ND - preheating train, into the HD - heating train and/or into the cold reheat conduit.

11. System with a fossil fuelled utility boiler plant and a waste incinerator plant and a flue gas cleaning plant connected to the utility boiler plant,
characterized in that at least one flue gas desulphurization plant (19) is connected to the flue gas outlet of the utility boiler plant (1) and in that a prepurification plant (36) is connected to the flue gas outlet of the waste incinerator plant (31), which prepurification plant in turn is connected to the inlet of the flue gas desulphurization plant (19) of the utility boiler plant (1).

12. System according to claim 11,
characterized in that the waste incinerator plant has a denoxification (34;41) and to the utility boiler plant (1) there is associated a SCR - denoxification (18), which is arranged before the flue gas cleaning plant (19).

13. System according to claim 11,
characterized in that the flue gas of the utility boiler plant (1) and the flue gas of the incinerator plant (31) may be commonly conducted through a denoxification plant (18).

## Revendications

1. Procédé de combustion de déchets et de combustible fossile dans une combinaison d'une installation de grandes chaudières à combustion fossile et d'une installation de combustion de déchets, procédé dans lequel les gaz d'échappement de l'installation de combustion de déchets sont réunis avec les gaz d'échappement de l'installation à combustion importante, et dans lequel une purification des gaz d'échappement est effectuée,
caractérisé en ce que
les gaz d'échappement de l'installation de combustion de déchets sont pré-purifiés du point de vue des métaux lourds et des dioxines/furanes (PCDD/F) avant leur réunion avec les gaz d'échappement de l'installation de grandes chaudières, et les gaz d'échappement de l'installation de combustion de déchets ainsi pré-purifiés sont envoyés, conjointement avec les gaz d'échappement de l'installation de grandes chaudières, à une désulfuration de gaz d'échappement.

2. Procédé selon la revendication 1,
caractérisé en ce que
la pré-purification est effectuée par refroidissement des gaz d'échappement, par addition d'au moins un agent de sorption et par séparation filtrante des matières solides présentes ou se formant.

3. Procédé selon la revendication 1 ou 2,
caractérisé en ce que
avant la pré-purification, un dépoussiérage préalable est effectué.

4. Procédé selon l'une des revendications 1 à 3,
caractérisé en ce que
les gaz d'échappement de l'installation de combustion de déchets sont dénitrurés avant la désulfuration.

5. Procédé selon la revendication 4,
caractérisé en ce que
les gaz d'échappement de l'installation de combustion de déchets sont dénitrurés avant l'élimination de métal lourd et d'hydrocarbures polyhalogénés.

6. Procédé selon l'une au moins des revendications 1 à 3,
caractérisé en ce que
les gaz d'échappement de l'installation de combustion de déchets et les gaz d'échappement de l'installation de grandes chaudières sont envoyés à l'installation de désulfuration par l'intermédiaire d'une étape de dénitruration commune.

7. Procédé selon l'une au moins des revendications 1 à 6,
caractérisé en ce que
lors du refroidissement des gaz d'échappement de l'installation de combustion de déchets par refroidissement par évaporation, au moins une partie des eaux usées d'une installation de désulfuration humide de gaz d'échappement est utilisée en tant qu'agent de refroidissement par évaporation.

8. Procédé selon l'une au moins des revendications 1 à 7,
caractérisé en ce que
dans la pré-purification au moins un agent d'absorption est utilisé pour l'élimination partielle de SO₂, HCl et HF.

9. Procédé selon l'une au moins des revendications 1 à 8,
caractérisé en ce que
la chaleur dégagée dans l'installation de combustion de déchets est introduite de préférence dans le circuit eau-vapeur de l'installation de grandes chaudières sous la forme de vapeur.

10. Procédé selon l'une au moins des revendications 1 à 9,
caractérisé en ce que
la vapeur produite dans l'installation de combustion de déchets est intégrée dans le segment de pré-chauffage à basse pression, dans le segment de pré-chauffage à haute pression et/ou dans la conduite de surchauffe intermédiaire froide.

11. Système comprenant une installation de grandes chaudières à combustion fossile et une installation de combustion de déchets et une installation de purification de gaz d'échappement montée en aval de l'installation à combustion importante,
caractérisé en ce qu'
au moins une installation de désulfuration de gaz d'échappement (19) est montée en aval, du côté gaz d'échappement, de l'installation à combustion importante, et en ce qu'une installation de pré-purification (36) est montée en aval, du côté gaz d'échappement, de l'installation de combustion de déchets (31), et en amont de l'installation de désulfuration de gaz d'échappement (19) de l'installation de grandes chaudières (1).

12. Système selon la revendication 11,
caractérisé en ce que
l'installation de combustion de déchets comporte une dénitruration (34 ; 41), et en ce qu'une dénitruration SCR (18) montée en amont de l'installation de purification de gaz d'échappement (19) est associée à l'installation de grandes chaudières (1).

13. Système selon la revendication 11, caractérisé en ce que le gaz d'échappement de l'installation de grandes chaudières (1) et le gaz d'échappement de l'installation de combustion de déchets (31) peuvent être menés conjointement à travers une installation de dénitruration (18).
